(19) **Europäisches Patentamt / European Patent Office / Office européen des brevets**

(11) **EP 1 674 755 B1**

(12) **EUROPEAN PATENT SPECIFICATION**

(45) Date of publication and mention
of the grant of the patent:
**30.09.2009 Bulletin 2009/40**

(51) Int Cl.:
*F16D 48/06* *(2006.01)*     *F16H 61/21* *(2006.01)*

(21) Application number: **05028194.8**

(22) Date of filing: **22.12.2005**

(54) **Automatic shift control apparatus**

Steuerungsvorrichtung für automatische Schaltung

Dispositif de contrôle pour changement de vitesses automatiques

(84) Designated Contracting States:
**DE FR GB**

(30) Priority: **27.12.2004 JP 2004377351**

(43) Date of publication of application:
**28.06.2006 Bulletin 2006/26**

(73) Proprietor: **AISIN SEIKI KABUSHIKI KAISHA
Kariya-shi, Aichi-ken 448-8650 (JP)**

(72) Inventors:
• **Haneda, Yoshitomi
IPD Aisin Seiki Kabushiki Kaisha
Kariya-shi,
Aichi-ken, 448-8650 (JP)**

• **Nakanishi, Koji
Aisin Engineering Co., Ltd.
Kariya,
Aichi, 448-8605 (JP)**

(74) Representative: **Kramer - Barske - Schmidtchen
European Patent Attorneys
Landsberger Strasse 300
80687 München (DE)**

(56) References cited:
EP-A- 0 270 708     EP-A- 1 013 497
EP-A- 1 152 172     FR-A- 2 824 790
FR-A- 2 851 629     JP-A- 57 160 729

**Description**

FIELD OF THE INVENTION

This invention generally relates to an automatic shift control apparatus for a vehicle.

BACKGROUND

JP2003-56692A discloses an automatic shift control apparatus, which drives actuators and controls an automated shift operation and an automated clutch engagement operation, in response to an operation amount of an accelerator pedal, a speed of a vehicle. In this automated manual transmission and so on. Because, if necessary, a clutch can be rotated in a slip manner, a driver can have a feeling of an improved vehicle driving performance, and moreover, it is possible to reduce fuel consumption. More specifically, when a level of engine torque reaches a negative, such as when an accelerator pedal being operated by a driver is returning to an initial position, this automatic shift control apparatus implements the slip control by which the clutch is rotated in a slip manner. This reference further discloses that the necessity of the slip control can be determined based on a shift operation data (e.g., a shift operation data map) stored in a memory of an ECU as well as a level of engine torque.

Because it is generally desirable that engine brake is also exerted at a time that a driver operates a brake element (e.g., a brake pedal), it is necessary to engage a clutch, which is different from a clutch slip operation. However, if a clutch engagement operation is implemented in response to any brake operation, there may be a possibility that a vehicle driving performance may be deteriorated.

FR-A-2 824 790, which forms the basis of the preamble of claim discloses a method to control vehicles with an automotive clutch, an engine controllable by an engine control means, an automated transmission and an electronic control unit adapted to control the transmission and the clutch, wherein a speed of the vehicle, an operation of a brake and/or a fuel supply control member and an operation condition of the engine are detected and the clutch is disengaged in case neither the brake paddle nor the fuel supply control member with a running engine are actuated and a speed of the vehicle is above a threshold value. The clutch is engaged as soon as the brake is actuated and/or the fuel supply control device is actuated, wherein a speed of a driving shaft of the transmission and the speed of the engine are controlled as to correspond to each other before the clutch is engaged. Furthermore, it is possible to engage the clutch as soon as a brake is actuated so as to generate engine brake.

EP 0 270 708 Al discloses an automatic transmission system for vehicles having a throttle-controlled engine, an operator actuated throttling control means, an operator actuated engine compression brake and a transmission with a plurality of gear ratio combinations. The system furthermore includes an information processing unit with means for receiving a plurality of input signals including an input signal indicative of the position of the throttle controlling means, an input signal indicative of the rotational speed of the engine, an input signal indicative of the speed of the vehicle, an input signal indicative of operation of the vehicle brakes. The processing unit further includes means for processing said input signals in accordance with a program to select a desirable gear ratio for a given combination of input signals and for generating output signals, whereby the transmission system is operated in accordance with said program and means associated with the transmission to actuate said transmission as to effect engagement of one of the gear ratio combinations in response to the output signals from the processing unit. The system furthermore includes means to receive an input signal indicative of actuation of the engine compression brake. Furthermore, the program has a first, a second and a third mutually exclusive mode of operation upon sensing vehicle deceleration, the engine speeds at which said processing unit commands downshifts in said first mode of operation exceeding the engine speeds at which said processing unit commands downshifts in said second mode of operation, the engine speeds at which said processing unit commands downshifts in said second mode of operation exceeding the engine speeds at which said processing unit commands downshifts in said third mode of operation and means to select operation in one of said first, second and third modes of operation.
The means to select operation in one of said modes become active as soon as a vehicle deceleration is detected. Operation in said first mode may be e.g. selected, if the throttle position exceeds a reference value, will select operation in said first mode if engine compression brake is actuated, will select operation in said second mode, if the vehicle brakes are actuated and the throttle signal does not exceed said reference value and the engine compression brake is not actuated, and will select operation the third mode if the throttle signal does not exceed said reference, the engine compressor brake is not actuated and the vehicle brakes are not actuated. The logics, how the means to select operation is combining the signals, may be modified.

SUMMARY OF THE INVENTION

It is an object of the invention to provide an automatic shift control apparatus for a vehicle, which appropriately controls a clutch engagement operation and supplies a vehicle driving impression that matches an intention of a driver.

A solution of this object is achieved with an automatic shift control apparatus according to appended claim 1.

Appended sub-claims are directed towards advantageous embodiments of the inventive automatic shift control apparatus.

With the inventive automatic shift control apparatus the controller recognizes whether a downshifting operation is needed or not on the basis of the shift operation data for downshifting and a corrected vehicle speed. The corrected vehicle speed is obtained by correcting an actual vehicle speed by which a degree of reduction in a vehicle speed is defined at a large value in response to an amount of the actual vehicle deceleration deducted by the vehicle acceleration deducting device. Accordingly, when a brake element is actuated, a shift operation to a lower shift stage is encouraged on the basis of a degree of acceleration (here a negative value). Therefore, according to the invention it is possible to supply a driving feeling that matches a driver's intention and to effectively reduce fuel consumption.

According to an aspect of the present invention, an automatic shift control apparatus for a vehicle provided between an engine for the vehicle and an axle includes: an automated clutch having a clutch; an automated transmission; a controller for controlling an operation of the automated clutch and a shifting operation in the automated transmission. and a brake operation condition detecting device which detects an operation condition of a brake element. When the brake operation condition detecting device detects the brake element being in an operation condition, the controller controls the clutch of the automated clutch to be engaged so as to generate engine brake. According to this automatic shift control apparatus, when the brake operation condition detecting device does not detect an operation condition of the brake element and an accelerator pedal is operated so as to reduce an accelerator opening degree, the controller can control the clutch of the automated clutch to be engaged so as to generate engine brake. The automatic shift control apparatus for a vehicle further includes; a vehicle acceleration detecting device which detects a vehicle deceleration; an accelerator opening degree detecting device which detects an actual accelerator opening degree. The controller includes: a memory storage module which stores a shift operation data established based on parameters showing vehicle state which are an vehicle speed and an accelerator opening degree detected by the accelerator opening degree detecting device, the shift operation data being employed for determining a necessity of a shift operation; and a corrected vehicle speed calculating module which corrects an actual vehicle speed based on a degree of a vehicle deceleration detected by the vehicle acceleration detecting device and obtains a corrected vehicle speed. When the brake operation condition detecting device detects a brake operation, the corrected vehicle calculating module obtains a corrected vehicle speed by correcting an actual vehicle speed with a vehicle speed correcting formula by which a degree of reduction in a vehicle speed is defined at a large value in response to amount of an actual vehicle deceleration (g) detected by the vehicle acceleration detecting device. The controller determines a necessity of a shift operation based on the shift operation data for downshifting from a current shift stage to a lower shift stage, the shift operation data being applied with a corrected vehicle speed obtained by the corrected vehicle speed calculating module, and the controller shifts the current shift stage to the lower shift stage or keep the current shift stage according to the necessity of the shift operation.

As described above, it is possible to supply a good shift feeling that matches an intention of a driver, because, in response to a vehicle driving condition, an appropriate shift stage can be selected and maintained and engine brake can be adjusted if necessary. For example, when a vehicle deceleration is large, a downshifting operation can be implemented actively and a large braking force can be encouraged by engine brake. Still for example, when a vehicle is at an inertia driving condition with an accelerator pedal returned to an initial position, a shift stage being currently established is maintained and a clutch clip control is implemented if necessary. Once the brake element is operated, the clutch is brought into engagement and engine brake is generated actively. Moreover, it is also possible to reduce fuel consumption for an engine, thereby enabling to improve fuel economy.

BRIEF DESCRIPTION OF THE DRAWING

The foregoing and additional features and characteristics of the present invention will become more apparent from the following detailed description considered with reference to the accompanying drawings, wherein:

Fig. 1 is a block view schematically illustrating an automated shift control apparatus according to an embodiment of the present invention;

Fig. 2 is a flowchart for explaining a program implemented every predetermined cycle under an automated shifting mode according to the embodiment of the present invention;

Fig. 3 is a diagram for explaining a relationship between a vehicle speed and a corrected vehicle speed; and

Fig. 4 is a diagram for explaining a shift operation data for downshifting, a corrected vehicle speed calculating process and a shift operation determining process.

DETAILED DISCRIPTION

An embodiment of the present invention will be described hereinbelow in detail with reference to the accompanying drawings.

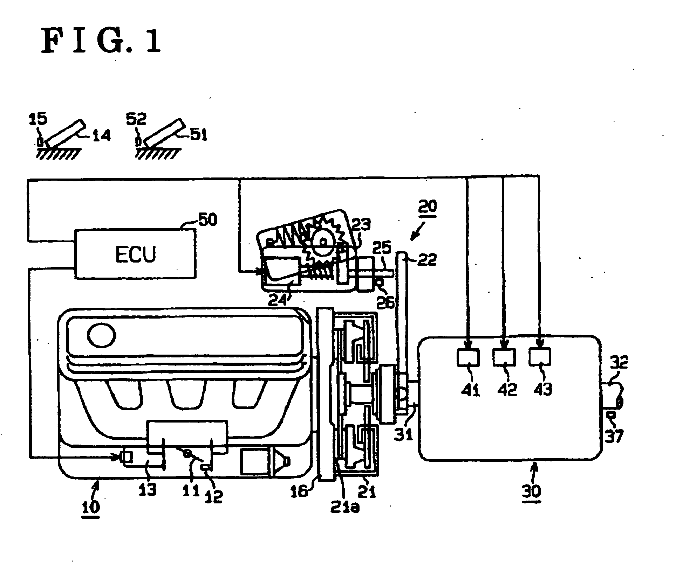

As illustrated in Fig. 1, an output shaft (a crankshaft) of an engine 10 is equipped with an automated clutch 20, via which an automated transmission 30 is connected to the engine 10.

The engine 10 is provided with a throttle valve 11, which adjusts an amount of intake air, a throttle sensor 12, which detects an opening degree of the throttle valve 11 (a throttle opening degree), and a throttle actuator 13, which operates opening and closing of the throttle valve 11.

The automated clutch 20 incorporates, therein, a mechanical (dry type-single disc) friction clutch 21 (a clutch), a clutch lever 22 (a release fork) and a clutch actuator 23, which controls, via the clutch lever 22, a transmission of a driving power of the engine 10 to the automated transmission 30 by the friction clutch 21.

The friction clutch 21 includes a clutch disc 21a integrally rotatable with an input shaft 31 of the automated transmission 30. In this type of friction clutch 21, it is possible, by changing a level of pushing load applied from the clutch disc 21a to a flywheel 16, to increase and decrease an amount of driving power transmitted between the flywheel 16 and the clutch disc 21a.

According to the clutch actuator 23, a rod 25 is selectively operated in a forward or rearward direction by a direct current electric motor 31, and the clutch lever 22 is operated in response to the forward or rearward operation of the rod 25.

For example, at an initial condition illustrated in Fig. 1, a pressure plate is being applied with a pushing load via a release bearing and a diaphragm spring, and the flywheel 16 is being applied with a pushing load of the clutch disc 21a. Therefore, in such circumstances, it is possible to transmit a rotation of the engine 10 side, i.e., to transmit a driving power from the engine 10 to the transmission 30. On the other hand, once the clutch lever 22 is operated, the release bearing is shifted towards the flywheel 16, and a posture of the diaphragm spring is changed. In such circumstances, a level of pushing load of the clutch disc 21a to the flywheel 16 is reduced. A moving amount, or an operation amount, of the rod 25 by the clutch actuator 23 is detected by a clutch stroke sensor 26.

The automated transmission 30 incorporates, therein, the input shaft 31 and an output shaft 32, the input shaft 31 which is connected to the friction clutch 21 so as to transmit a driving power from the friction clutch 21 side to the transmission 30, and the output shaft 32 which is associated with an axle (not illustrated) so as to transmit a driving power to the axle. The automated transmission 30 is further provided with shift actuators 41, 42 and 43 for selectively switching a shift stage established in the transmission 30. Therefore, it is possible to selectively establish plural shift stages in the transmission 30.

An output rotation sensor 37 (i.e., a vehicle acceleration detecting device) is provided in the vicinity or at the output shaft 32 of the automated transmission 30 and detects the rotational number (a rotational speed) of the output shaft 32. An actual or current speed, and an actual or current acceleration, of a vehicle can be obtained on the basis of the rotational number of the output shaft 32.

At the top in Fig. 1, illustrated are an accelerator pedal 14 and a brake pedal 51 (a brake element), the pedals that are located inside a vehicle compartment and are respectively operated by a driver of a vehicle. An accelerator sensor 15 (i.e., an accelerator opening degree detecting device) is provided in the vicinity, or at, the accelerator pedal 14 for the purpose of detecting an operation amount of the accelerator pedal 14 (i.e., an actual accelerator opening degree), while a brake SW 52 is provided in the vicinity, or at, the brake pedal 51 for the purpose of detecting an actual operation of the brake pedal 51. According to the embodiment of the present invention, the brake SW 52 is included in a brake operation condition detecting device.

An electronic control unit 50 (an ECU, a controller, a corrected vehicle speed calculating module) is mainly configured with a micro computer (CPU) and incorporates, therein, a Read-only Memory (a ROM, a memory storage module) used as a storage medium because it cannot (easily) be written to, a Random-access Memory (a RAM) used as a type of computer storage whose contents can be accessed in any (i.e., random) order, and an Electrically-Erasable Programmable Read-Only Memory (an EEPROM) used as a nonvolatile storage without a back-up power source. The ROM stores, therein, various programs, maps as a shift operation data for determination of shift change operation and so on. The ECU 50 is connected to various sensors such as the throttle sensor 12, an engine rotational speed sensor, a transmission input shaft rotational speed sensor, a shift sensor, and a gear sensor as well as the accelerator sensor 15, the clutch stroke sensor 26, the output rotation sensor 37 and the brake SW (sensor) 52. The ECU 50 obtains or recognizes, on the basis of input values as parameters from these various sensors and switches, at least one vehicle driving condition such as a throttle opening degree, an accelerator opening degree, an engine rotational speed, a rotational transmitting condition of the friction clutch 21, a transmission input shaft rotational speed, a vehicle speed, a shift position, an operation and an operation amount of a brake element and an operation of a side brake, or a combination thereof, and controls ISC valves and so on as well as the clutch actuator 23, the shit actuators 41, 42 and 43 in response to the vehicle driving condition through the installed program.

For example, the ECU 50 can obtain an operation amount of the accelerator pedal 14 (a current accelerator opening degree) on the basis of a value detected by the accelerator sensor 15. The throttle actuator 30 is activated on the basis of an accelerator opening degree. Accordingly, an amount of intake air to the engine 10 can be adjusted and an engine output (a driving power from the engine 10), which responds to an operation of the accelerator pedal 14, can be generated. For example, at a time of shifting, the ECU 50 disengages the friction clutch 21 by activating the clutch actuator 23 and closes the throttle value 11 by activating the throttle actuator 13. Following the aforementioned controls, the ECU 50 then activates the shift actuators 41, 42 and 43 respectively as needed and switches a shift stage established in the transmission 30.

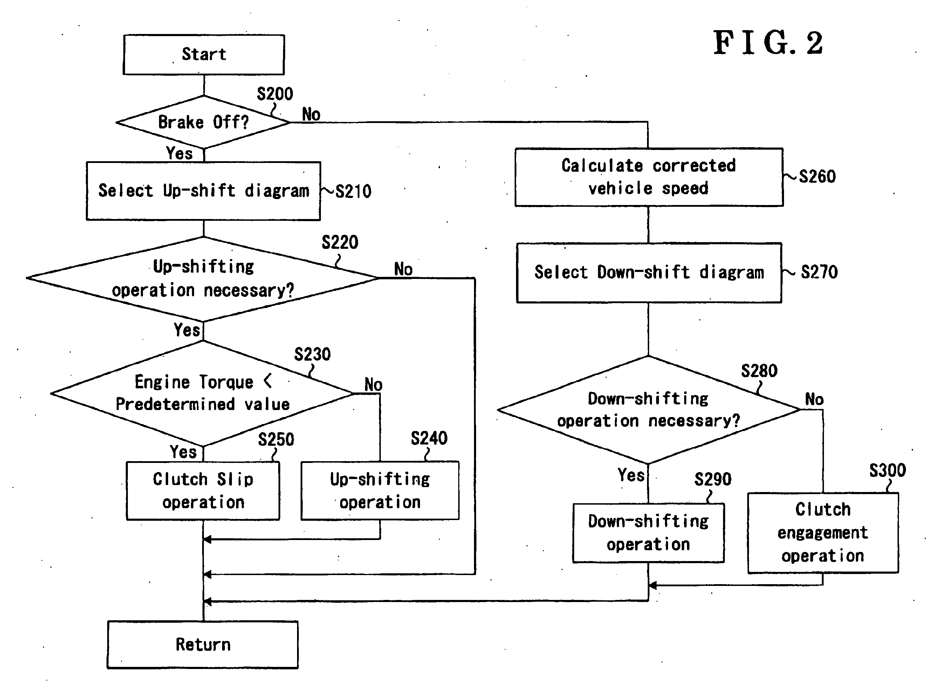

As is apparent from the flowchart illustrated in Fig. 2, first of all, the ECU 50 determines, in step 200, a brake condition so as to detect an operation condition of a brake element. In detail, in step 200, the ECU 50 determines whether the brake SW 52 is at an off or on state. When the brake SW 52 is determined to be at an off state, i.e., when the brake pedal 51 is determined to be at a not-operated condition, the program proceeds to step 210, wherein the ECU 50 selects a shift operation data for upshifting from a currently established shift stage for transmitting a driving power to a higher shift stage (e.g., an upshift operation data map). Following the above procedures, the ECU 50 then determines, in step 220, a necessity of an up-shifting operation on the basis of an actual vehicle speed V and an actual accelerator opening degree T. When the ECU 50 determines in step 220 that an up-shifting operation is not needed, the program is terminated.

On the other hand, when the ECU 50 determines, in step 2210, that an up-shifting operation is needed, the program proceeds to step 230. In step 230, the ECU 50 computes a degree of engine torque on the basis of a throttle opening degree and an engine rotational speed and determines whether the computed degree of engine torque is greater than a predetermined value. Here, the predetermined value can be set at zero. When the ECU 50 determines that the computed degree of engine torque is substantially equal to, or greater than, the predetermined value, the program proceeds to step 240, wherein an up-shifting operation is implemented. On the other hand, when the ECU 50 determines that the computed degree of engine torque is smaller than the predetermined value, the program proceeds to step 250, wherein a slip control of the friction clutch 21 is implemented. According to the slip control of the friction clutch 21, a transmission torque of the friction clutch 21 is controlled to a low level such as an approximately few percentages out of a transmission torque generated at a clutch fully engaged condition. This slip control of the friction clutch 21 is terminated when a degree of engine torque reaches the predetermined value.

On the other hand, when the brake SW 52 is at an on state in step 200, the program proceeds to step 260 to implement a corrected vehicle speed calculation. According to the embodiment of the present invention, a corrected vehicle speed Vr, which is employed for determining a necessity of a shift operation, is obtained in accordance with the following formula 1:

$$Vr = (1 + A \times G) \times V + B \times G \cdots\cdots\cdots\cdots\cdots\cdots 1.$$

In this formula 1, the corrected vehicle speed Vr is calculated on the basis of an actual vehicle speed V, an actual vehicle acceleration G, a coefficient A of a gain term (0<A<1) and a coefficient B of an offset term. A first term (($(1 + A \times G) \times V$) at the right side member of the formula is a gain term, while a second term ($B \times G$) thereof is an offset term. As described above, the corrected vehicle speed Vr can be produced by obtaining a product between a vehicle speed V and a gain (here, an attenuating ratio), the gain which is controlled in accordance with a vehicle acceleration G, and by subtracting, from the product, an offset amount that is controlled in accordance with a vehicle acceleration ration G.

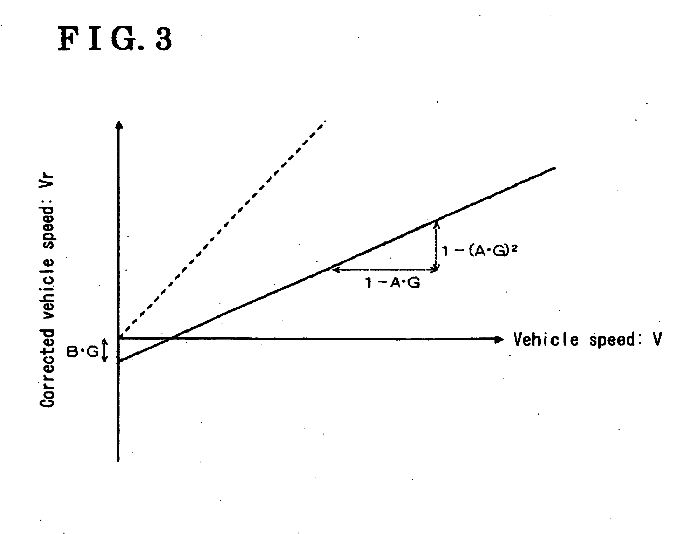

As is apparent from Fig. 3, a broken line therein denotes a value Vr which is obtained by correcting an actual vehicle speed V in circumstances where a vehicle acceleration G is approximately equal to zero ($G \approx 0$), e.g., in a circumstance where a brake element such as the brake pedal 51 is applied with a relatively small operation force, while a solid line therein denotes a value Vr obtained by correcting an actual vehicle speed V in circumstances where a vehicle acceleration G (here, a negative value) reaches less than zero (G < 0), e.g., in a circumstance where a brake element such as the brake pedal 51 is applied with a relatively large operation force. As is obvious from Fig. 3, when the brake pedal 51 is applied with a relatively small operation force ($G \approx 0$), a corrected vehicle speed Vr is controlled approximately equal to an actual vehicle speed V ($Vr \approx V$). On the other hand, when the brake pedal 51 is applied with a relatively large operation force (G < 0), the corrected vehicle speed Vr is controlled at a smaller value than an actual vehicle speed V ($Vr < V$).

Following the calculation of a corrected vehicle speed Vr in step S260, the program proceeds to step S270 so as to select a shift operation data for downshifting from a currently established shift stage (e.g., a N shift stage) for transmitting a driving power to a lower shift stage(e.g., a N-1 shift stage) (e.g., a downshift operation data map). In step 280, the ECU 50 determines, on the basis of a relationship between a corrected vehicle speed Vr and an accelerator opening degree T, the necessity of a down-shifting operation.

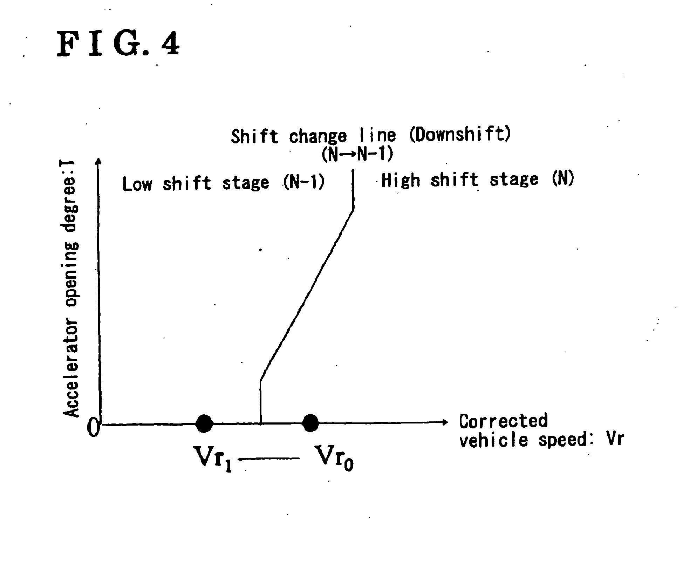

A diagram illustrated in Fig. 4 is established with a Y-axis representing an accelerator opening degree T and an X-axis representing a corrected vehicle speed Vr. When a vehicle acceleration G (negative) is generated very few due to a small brake operation for example (e.g., $G \approx 0$), a corrected vehicle speed $V_{r0}$, which is substantially identical to an actual vehicle speed V, is obtained. In this case, unless an accelerator opening degree T exceeds a considerably large value, the ECU 50 does not recognize a necessity of a downshifting operation.

Meanwhile, when a vehicle acceleration G (negative) is generated due to a brake operation to a certain extent (e.g., $G < 0$), a corrected vehicle speed $V_{r1}$, which is sufficiently smaller than an actual vehicle speed V, is obtained. In this case, the ECU 50 recognizes a necessity of a downshifting operation. Therefore, as described above, when a brake operation is implemented at a large degree (e.g., $G < 0$), compared with a small or few brake operation (*e.g.*, $G \approx 0$), under the same vehicle speed V, a downshifting operation can be effectively encouraged.

As described above, when the ECU 50 recognizes, on the basis of the shift operation data for downshifting, a corrected vehicle speed Vr and an accelerator opening degree T, that a downshifting operation is needed, the program proceeds from step 280 to 290 for implementing a downshifting operation. On the other hand, when the ECU 50 recognizes, on the basis of the shift operation data for downshifting, a corrected vehicle speed Vr and accelerator opening degree T, that a downshifting operation is not needed, the program proceeds from step 280 to step 300 for discontinuing a slip control and for implementing a clutch engagement operation.

As described above, according to the embodiment of the present invention, it is possible to determine, on the basis of a driver's intention of vehicle speed reduction and a brake operation condition, a necessity of a clutch slip control. When a brake element such as the brake pedal 51 is not being operated, an appropriate shift stage is selected and a clutch slip control is executed. On the other hand, when a brake element such as the brake pedal 51 is being operated, as described above, a shift operation to a lower shift stage is encouraged on the basis of a degree of acceleration G (here, a negative value). Therefore, according to the embodiment of the present invention, it is possible to supply a driving feeling that matches a driver's intention and to effectively reduce fuel consumption.

According to the above-descried embodiment of the present invention, the automatic shift control apparatus includes a parallel axes type transmission as an automated transmission 30 and an actuator. Alternatively, the automatic shift control apparatus can include: a torque converter; an automatic transmission incorporating, therein, plural planetary gears and frictional engagement elements. In this case, the same effects can be generated.

**Claims**

1.  An automatic shift control apparatus for a vehicle provided between an engine (10) for the vehicle and an axle, the apparatus comprising:

    an automated clutch (20) having a clutch (21);
    an automated transmission (30);
    a controller (50) for controlling an operation of the automated clutch (20) and a shifting operation in the automated transmission (30),
    a brake operation condition detecting device (50, 52) which detects an operation condition of a brake element (51),
    wherein when the brake operation condition detecting device (50, 52) detects operation condition of the brake element (51), the controller (50) controls the clutch (21) of the automated clutch (20) to be engaged so as to generate engine brake,
    **characterized by** further comprising
    a vehicle acceleration detecting device (37) which detects a vehicle deceleration (G);
    an accelerator opening degree detecting device (15) which detects an accelerator opening degree (T); and
    the controller (50) comprising:

        a memory storage module (ROM) which stores a shift operation data established based on parameters showing the vehicle state, the shift operation data being employed for determining a necessity of a shift operation; and
        a corrected vehicle speed calculating module (50) which corrects an actual vehicle speed (V) based on an actual vehicle deceleration (G) detected by the vehicle acceleration detecting device (37) and obtains a corrected vehicle speed (Vr),

        wherein, when the brake operation condition detecting device (50, 52) detects the brake element being in operation condition, the corrected vehicle calculating module (50) obtains a corrected vehicle speed (Vr) by correcting an actual vehicle speed (V) with a vehicle speed correcting formula (1) by which a degree of reduction in a vehicle speed is defined at a large value in response to an amount of the actual vehicle deceleration (G) detected by the vehicle acceleration detecting device (37), and

wherein the controller (50) determines a necessity of a shift operation based on the shift operation data for downshifting from a current shift stage to a lower shift stage, the shift operation data being applied with a corrected vehicle speed (Vr) obtained by the corrected vehicle speed calculating module (50),and the controller (50) shifts the current shift stage to the lower shift stage or keep the current shift stage according to the necessity of the shift operation.

2. An automatic shift control apparatus according to claim 1, wherein the parameters showing the vehicle state stored in the memory storage module are a vehicle speed and the accelerator opening degree.

3. An automatic shift control apparatus according to claim 2, wherein the vehicle speed correcting formula (1) is structured with a corrected vehicle speed (Vr), an actual vehicle speed (V), a vehicle deceleration (G), a gain term (A) as a constant and an offset term (B) as a constant, and the vehicle speed correcting formula (1) is represented by formula 1:

$$Vr = (1 + A \times G) \times V + B \times G.$$

4. An automatic shift control apparatus according to any of claims 1, 2 and 3, wherein, when the brake operation condition detecting device (50,52) does not detects a brake operation, the controller (50) implements a clutch slip control by disengaging the clutch (21) so as to reduce a transmission torque of the clutch (21).

5. An automatic shift control apparatus according to any preceding claim, wherein, when the controller (50) determines that a torque of the engine (10) is smaller than a predetermined value, the controller (50) implements a clutch slip control by disengaging the clutch (21) so as to reduce a transmission torque of the clutch (21).

6. An automatic shift control apparatus according to any of claims 2 to 5, wherein, when the controller (50) determiners, based on an actual vehicle speed (V) and an actual accelerator opening degree (T), that an upshifting operation is needed, the controller (50) obtains a torque of the engine (10) based on an actual throttle opening degree and an actual engine rotational speed, and
wherein, when the controller (50) determines that the torque of the engine (10) is equal to, or greater than, a predetermined value, the controller (50) implements an upshifting operation.

7. An automatic shift control apparatus according to any preceding claim, wherein the automatic shift control apparatus includes a parallel axes type transmission as the automated transmission (30) and an actuator (23,41,42,43).

**Patentansprüche**

1. Steuervorrichtung für eine automatische Schaltung eines Fahrzeugs, die zwischen einer Maschine (10) des Fahrzeugs und einer Achse vorgesehen ist, welche Vorrichtung enthält:

eine automatisierte Kupplung (20) mit einer Kupplung (21);
ein automatisiertes Getriebe (30);
einen Controller (50) zum Steuern eines Betriebs der automatisierten Kupplung (20) und eines Schaltvorgangs in dem automatisierten Getriebe (30),
eine Bremsbetätigungszustandserfassungsvorrichtung (50, 52), die einen Betätigungszustand eines Bremselements (51) erfasst,
wobei, wenn die Bremsbetätigungszustandserfassungseinrichtung (50, 51) einen Betätigungszustand des Bremselements (51) erfasst, der Controller (50) die Kupplung (21) der automatisierten Kupplung (20) derart steuert, dass sie in Eingriff ist, um eine Maschinenbremsung zu erzeugen,
**dadurch gekennzeichnet, dass** sie weiter enthält
eine Fahrzeugbeschleunigungserfassungsvorrichtung (37), die eine Fahrzeugbeschleunigung (G) erfasst;
eine Beschleunigeröffnungsgraderfassungsvorrichtung (15), die einen Beschleunigeröffnungsgrad (T) erfasst; und
wobei der Controller (50) enthält:

ein Datenspeichermodul (ROM), das Schaltvorgangsdaten speichert, die basierend auf den Fahrzeugzustand zeigenden Parametern festgelegt sind, welche Schaltvorgangsdaten verwendet werden, um einen Notwendigkeit eines Schaltvorgangs zu bestimmen; und

ein Modul (50) zum Berechnen einer korrigierten Fahrzeuggeschwindigkeit, welches Modul eine aktuelle Fahrzeuggeschwindigkeit (V) basierend auf einer aktuellen Fahrzeugverzögerung (G), die von der Fahrzeugbeschleunigungserfassungsvorrichtung (37) erfasst wird, korrigiert und eine korrigierte Fahrzeuggeschwindigkeit (Vr) ermittelt,

wobei, wenn die Bremsbetätigungszustandserfassungsvorrichtung (50, 52) erfasst, dass das Bremselement in einem Betätigungszustand ist, das Modul (50) zum Berechnen einer korrigierten Fahrzeuggeschwindigkeit eine korrigierte Fahrzeuggeschwindigkeit (Vr) ermittelt, indem eine aktuelle Fahrzeuggeschwindigkeit (V) mit einer Fahrzeuggeschwindigkeitskorrigierformel (1) korrigiert wird, mittels der ein Ausmaß einer Verminderung einer Fahrzeuggeschwindigkeit in hohem Maß in Abhängigkeit von einer Größe der aktuellen Fahrzeugverzögerung (G) definiert wird, die von der Fahrzeugbeschleunigungserfassungsvorrichtung (37) erfasst wird, und

wobei der Controller (50) eine Notwendigkeit eines Schaltvorgangs basierend auf den Schaltvorgangsdaten zum Herunterschalten von einer aktuellen Schaltstufe zu einer niedrigeren Schaltstufe bestimmt, wobei die Schaltvorgangsdaten mit einer korrigierten Fahrzeuggeschwindigkeit (Vr) beaufschlagt werden, die von dem Modul (50) zum Berechnen einer korrigierten Fahrzeuggeschwindigkeit erhalten wird, und der Controller (50) die aktuelle Schaltstufe auf eine niedrigere Schaltstufe schaltet oder die aktuelle Schaltstufe beibehält, entsprechend der Notwendigkeit des Schaltvorgangs.

2. Steuervorrichtung für eine automatische Schaltung nach Anspruch 1, wobei die Parameter, die den in dem Datenspeichermodul gespeicherten Fahrzeugzustand zeigen, die Fahrzeuggeschwindigkeit und der Beschleunigeröffnungsgrad sind.

3. Steuervorrichtung für eine automatische Schaltung nach Anspruch 2, wobei die Fahrzeuggeschwindigkeitskorrekturformel (1) eine korrigierte Fahrzeuggeschwindigkeit (Vr), eine aktuelle Fahrzeuggeschwindigkeit (V), eine Fahrzeugverzögerung (G), einen Verstärkungsterm

(A) als eine Konstante und einen Offset-Term (B) als eine Konstante enthält und durch folgende Formel gegeben ist:

$$Vr = (1 + A \times G) \times V + B \times G.$$

4. Steuervorrichtung für eine automatische Schaltung nach einem der Ansprüche 1, 2 und 3, wobei, wenn die Bremsbetätigungszustandserfassungsvorrichtung (50, 52) keinen Bremsvorgang erfasst, der Controller (50) eine Kupplungsschlupfsteuerung implementiert, indem die Kupplung (21) ausgerückt wird, um eine Drehmomentübertragung der Kupplung (21) zu vermindern.

5. Steuervorrichtung für eine automatische Schaltung nach einem der vorhergehenden Ansprüche, wobei, wenn der Controller (50) ermittelt, dass ein Drehmoment der Maschine (10) kleiner als ein vorbestimmter Wert ist, der Controller (50) eine Kupplungsschlupfsteuerung implementiert, indem die Kupplung (21) ausgerückt wird, um eine Drehmomentübertragung in der Kupplung (21) zu vermindern.

6. Steuervorrichtung für eine automatische Schaltung nach einem der Ansprüche 2 bis 5, wobei, wenn der Controller (50) basierend auf einer aktuellen Fahrzeuggeschwindigkeit (V) und einem aktuellen Beschleunigeröffnungsgrad (T) bestimmt, dass ein Hochschaltvorgang notwendig ist, der Controller (50) ein Drehmoment der Maschine (10) basierend auf einem aktuellen Drosselöffnungsgrad und einer aktuellen Maschinendrehzahl ermittelt, und, wobei, wenn der Controller (50) bestimmt, dass das Drehmoment der Maschine (10) gleich oder größer als ein vorbestimmter Wert ist, der Controller (50) einen Hochschaltvorgang implementiert.

7. Steuervorrichtung für eine automatische Schaltung nach einem der vorhergegangenen Ansprüche, wobei die automatische Schaltsteuervorrichtung ein Getriebe in Parallelachsenbauweise als das automatisierte Getriebe (30) und einen Aktuator (23, 41, 42, 43) enthält.

**Revendications**

1. Appareil de commande de changement de vitesses automatique pour véhicule aménagé entre un moteur (10) pour le véhicule et un essieu, l'appareil comprenant :

   un embrayage automatisé (20) ayant un embrayage (21) ;
   une transmission automatisée (30) ;
   un dispositif de commande (50) pour commander un fonctionnement de l'embrayage automatisé (20) et une opération de changement de vitesse dans la transmission automatisée (30),
   un dispositif de détection d'état de fonctionnement des freins (50, 52) qui détecte un état de fonctionnement d'un élément de frein (51),

   dans lequel, lorsque le dispositif de détection d'état de fonctionnement des freins (50, 52) détecte un état de fonctionnement de l'élément de frein (51), le dispositif de commande (50) commande l'embrayage (21) de l'embrayage automatisé (20) pour qu'il s'engage de manière à générer un frein moteur,
   **caractérisé en outre par le fait qu'**il comprend :

   un dispositif de détection d'accélération de véhicule (37) qui détecte une décélération (G) du véhicule ;
   un dispositif de détection de degré d'ouverture d'accélérateur (15) qui détecte un degré (T) d'ouverture de l'accélérateur ; et
   le dispositif de commande (50) comprenant :

   un module de stockage en mémoire (ROM) qui stocke des données de fonctionnement de changement de vitesse établies sur la base de paramètres montrant l'état du véhicule, les données de fonctionnement du changement de vitesse étant employées pour déterminer la nécessité d'une opération de changement de vitesse ; et
   un module de calcul de vitesse corrigé (50) du véhicule qui corrige une vitesse réelle (V) du véhicule sur la base d'une décélération réelle (G) du véhicule détectée par le dispositif de détection d'accélération (37) du véhicule et obtient une vitesse corrigée (Vr) du véhicule,

   dans lequel, lorsque le dispositif de détection d'état de fonctionnement des freins (50, 52) détecte l'élément de frein en état de fonctionnement, le module de calcul corrigé (50) du véhicule obtient une vitesse corrigée (Vr) du véhicule en corrigeant une vitesse réelle (V) du véhicule avec une formule de correction de vitesse (1) du véhicule, par laquelle un degré de réduction d'une vitesse du véhicule est définie à une grande valeur en réponse à une quantité de décélération réelle (G) du véhicule détectée par le dispositif de détection d'accélération (37) du véhicule, et dans lequel le dispositif de commande (50) détermine la nécessité d'une opération de changement de vitesse sur la base des données de l'opération de changement de vitesse pour effectuer une rétrogradation d'un étage de changement de vitesse réel à un étage de changement de vitesse inférieur, les données de l'opération de changement de vitesse étant appliquées avec une vitesse corrigée (Vr) du véhicule obtenue par le module de calcul de vitesse corrigé (50) du véhicule, et le dispositif de commande (50) passe de l'étage de changement de vitesse réel à l'étage de changement de vitesse inférieur ou maintient l'étage de changement de vitesse réel selon la nécessité de l'opération de changement de vitesse.

2. Appareil de commande de changement de vitesse automatique selon la revendication 1, dans lequel les paramètres montrant l'état du véhicule stockés dans le module de stockage en mémoire sont une vitesse du véhicule et le degré d'ouverture de l'accélérateur.

3. Appareil de commande de changement de vitesse automatique selon la revendication 2, dans lequel la formule de correction de vitesse (1) du véhicule est structurée avec une vitesse corrigée (Vr) du véhicule, une vitesse réelle (V) du véhicule, une décélération (G) du véhicule, un terme de gain (A) sous la forme d'une constante et un terme de décalage (B) sous la forme d'une constante, et la formule de correction de vitesse (1) du véhicule est représentée par la formule 1 :

$$Vr = (1 + A \times G) \times V + B \times G.$$

4. Appareil de commande de changement de vitesse automatique selon l'une quelconque des revendications 1, 2 et 3, dans lequel, lorsque le dispositif de détection d'état de fonctionnement des freins (50, 52) ne détecte pas de fonctionnement de frein, le dispositif de commande (50) met en oeuvre une commande de glissement de l'embrayage en dégageant l'embrayage (21) de manière à réduire un couple de transmission de l'embrayage (21).

5. Appareil de commande de changement de vitesse automatique selon l'une quelconque des revendications précédentes, dans lequel, lorsque le dispositif de commande (50) détermine qu'un couple de torsion du moteur (10) est inférieur à une valeur prédéterminée, le dispositif de commande (50) met en oeuvre une commande de glissement d'embrayage en dégageant l'embrayage (21) de manière à réduire un couple de transmission de l'embrayage (21).

6. Appareil de commande de changement de vitesse automatique selon l'une quelconque des revendications 2 à 5 dans lequel, lorsque le dispositif de commande (50) détermine, sur la base d'une vitesse réelle (V) du véhicule et d'un degré d'ouverture d'accélérateur réel (T), qu'une opération de passage à une vitesse supérieure est nécessaire, le dispositif de commande (50) obtient un couple de torsion du moteur (10) basé sur un degré d'ouverture d'étranglement réel et une vitesse de rotation de moteur réelle, et

dans lequel, lorsque le dispositif de commande (50) détermine que le couple de torsion du moteur (10) est égal ou supérieur à une valeur prédéterminée, le dispositif de commande (50) met en oeuvre une opération de passage à une vitesse supérieure.

7. Appareil de commande de changement de vitesse automatique selon l'une quelconque des revendications précédentes, dans lequel l'appareil de commande de changement de vitesse automatique comprend une transmission du type à axes parallèles comme la transmission automatisée (30) et un dispositif d'actionnement (23, 41, 42, 43).

# FIG.1

# FIG. 2

```
                    ┌─────────────┐
                    │    Start    │
                    └──────┬──────┘
                           │     S200
                        ╱──┴──╲              No
                      ╱  Brake  ╲──────────────────────────────┐
                       ╲  Off? ╱                                │
                        ╲──┬──╱                                 │
                       Yes │                                    │
              ┌─────────────┴─────────────┐      ┌──────────────┴─────────────┐
              │ Select Up-shift diagram    │~S210 │  Calculate corrected        │~S260
              └─────────────┬─────────────┘       │     vehicle speed           │
                            │                      └──────────────┬─────────────┘
                            │      S220                           │
                       ╱────┴────╲          No    ┌──────────────┴─────────────┐
                     ╱ Up-shifting ╲───────────┐  │ Select Down-shift diagram   │~S270
                      ╲ operation   ╱          │  └──────────────┬─────────────┘
                       ╲ necessary?╱           │                 │
                        ╲────┬────╱            │                 │
                        Yes  │                 │                 │      S280
                        ╱────┴────╲            │            ╱────┴────╲         No
                      ╱  Engine    ╲    No      │          ╱ Down-shifting╲────────┐
                       ╲ Torque <  ╱───────┐   │           ╲ operation   ╱        │
                        ╲Predeterm.╱       │   │            ╲ necessary? ╱         │
                         ╲ value  ╱        │   │             ╲────┬────╱          │
                          ╲──┬──╱          │   │             Yes  │   S290         │
                      Yes │  S250          │   │             ┌────┴─────┐    S300  │
              ┌───────────┴──┐  ┌──────────┴─┐ │             │Down-shift │  ┌──────┴──────┐
              │ Clutch Slip   │  │Up-shifting │ │             │ operation │  │   Clutch     │
              │  operation    │  │ operation  │ │             └────┬──────┘  │ engagement   │
              └───────┬───────┘  └─────┬──────┘ │                  │         │  operation   │
                      │                │        │                  │         └──────┬───────┘
                      ├────────────────┘        │                  │                │
                      ├─────────────────────────┼──────────────────┤                │
                      ├─────────────────────────┴──────────────────┴────────────────┘
              ┌───────┴───────┐
              │    Return     │
              └───────────────┘
```

EP 1 674 755 B1

# FIG. 3

# FIG. 4

Shift change line (Downshift)
(N→N-1)

Low shift stage (N-1)     High shift stage (N)

Accelerator opening degree: T

0

$Vr_1$ —— $Vr_0$

Corrected
vehicle speed: Vr

**EP 1 674 755 B1**

**Patent documents cited in the description**

- JP 2003056692 A
- FR 2824790 A
- EP 0270708 A